# EUROPEAN PATENT APPLICATION

(11) **EP 0 676 383 A2**
(43) Date of publication of application: **11.10.1995**
(21) Application number: 95420078.8
(22) Date of filing: 27.03.1995
(51) Int. Cl.: C04B 38/00

(54) **Process for preparing a porous or pseudoporous anisotropic material, with a ceramic polymer lattice**

(30) Priority: 06.04.1994 FR 9404560; 03.06.1994 FR 9407154
(71) Applicant: KODAK-PATHE, F-75594 Paris Cedex 12 (FR); EASTMAN KODAK COMPANY, Rochester, New York 14650-2201 (US)
(72) Inventor: Dabadie, Thierry, F-34000 Montpellier (FR); Ayral, André, F-34670 St. Bres (FR); Robert, Jean Christophe, F-71102 Chalon Sur Saone (FR); Guizard, Christian, F-34150 Gignac (FR)
(74) Representative: Parent, Yves

(57) **Abstract**

The present invention concerns the preparation of a porous or "pseudoporous" anisotropic material.

The anisotropic material consists of a conglomerate including, on the one hand, discreet micellar units with a configuration which is at least partly tubular and with a structure of the lyotropic liquid crystal type and/or the impressions thereof, and, on the other hand, a matrix based on ceramic polymer with alkoxide recurrent elements, in which the said units and/or their impressions are included, characterised in that it consists essentially of:
- mixing an ionic surfactant, water and at least one alkoxide in proportions chosen so that a lyotropic liquid crystal structure can form and a condensation hydrolysis reaction allowing the polymerisation of the alkoxide recurrent elements can take place
- and optionally eliminating the micellar units so as to make the material porous.

The present material can be used for example as a carrier for active molecules in linear and non-linear optics and in catalysis.

## Description

The field of the invention is that of the preparation of ceramic and particularly silicon materials, able to be applied in particular in electronics, in semiconductor technology, in optoelectronics and in linear or non-linear optics.

More precisely, the invention comes within the scope of technologies for the synthesis of inorganic polymers known as "sol-gel" and concerns a process for preparing a composite porous or pseudoporous material of a ceramic nature.

Furthermore, the invention concerns the use of such new materials as inorganic microporous membrane which can be used for example, in separative technologies such as the nanofiltration, the pervaporation or the gas separation.

Because of the properties expected for such ceramic materials in the various fields of application mentioned above, it is clear that the microstructure and more particularly the porosity are decisive technical matters to be taken into consideration.

The present disclosure will therefore relate to the synthesis of microporous anisotropic materials in the form of monoliths or thin films and their use in thin films in the form of membranes or catalyst carriers.

Thus, through US patents 5,098,684 and 5,057,296, mesoporous materials are known which are useful as absorbent supports, catalysts or separation means. These materials have a non-lamellar structure and are characterised by a uniform pore size distribution, between 13 and 200 Å. A mesoporous structure of this type corresponds to a hexagonal organisation. The crystalline chemical species concerned are zeolites (aluminosilicates) doped with various elements, metallic or otherwise, such as manganese, cobalt, iron, magnesium, boron, phosphorus, gallium, germanium, etc.

The method of synthesising these mesoporous zeolites involves structuring compounds consisting of surfactants of the quaternary ammonium type. During such syntheses, which can be termed hydrothermal, these ionic surfactants form micelles in the aqueous medium for crystallising the zeolites. This brings about a confinement of the alumosilicates during crystallisation. Thus tubular pores are formed with a hexagonal cross section, the walls of which consist of crystallised zeolites. According to these patents, it is possible to vary the size of the pores by acting on the length of the alkyl chains of the surfactant (30, 34 and 38 Å). This type of crystallisation takes place under relatively drastic conditions, since the reaction medium containing the aluminosilicates and the structuring surfactant is placed in an autoclave and raised to a temperature of around 100°C for several hours. After this treatment, an additional calcination step is provided for, enabling the surfactant to be eliminated, thus leaving voids, the apertures in the hexagonal tubular units constituting the mesoporous material. The calcination temperature is approximately 550°C. The material obtained is in the form of a crystalline porous powder.

This type of synthesis therefore suffers from the major drawback of taking a long time and being complex to implement.

Another notable drawback of this type of synthesis is that it results in products in a powdery solid form, which limits and/or complicates the possibilities for subsequent conversion into products suited to the end applications.

By hydrothermal synthesis, the obtained porous powders are in the form of microcrystallites (size from about 0.1 to 1 µm) which can be used as a catalytic support in the conversion reactions of organic compounds, for example in the catalytic cracking. When thin films have to be obtained from this technique, it is necessary to form directly this material inside a porous support. In this case, the continuity and homogeneity of the film are not controlled.

In parallel to these techniques for the synthesis of porous zeolites, for the past few years new methods of preparing ceramic materials, by the "sol-gel" process, have been developing, in which molecular precursors are used in solution. This is a chemistry which is easy to use, particularly because of the liquid nature of the reaction medium and the reaction conditions: ambient atmosphere and temperature.

More precisely, the "sol-gel" method consists of a mineral polymerisation of recurrent elements of the alkoxide type, at ambient temperature. This polymerisation uses hydrolysis and condensation reactions resulting in polymer gels, constituting a choice of raw material for the forming of various articles : thin films, fibres, fine powders, solid materials or monoliths.

For example, European Patent application EP 248748 describes a process for obtaining mineral membranes constituted of a powder of silicon and titanium oxide by sol-gel process. This process consists in mixing one or more titanium alkoxides and one or more silicon alkoxides in an alkane or alcohol type solvent with a determined ratio so that to form macromolecules of silicon titanium mixed alkoxides, then in hydrolysing this solution to form a silicon titanium alkoxide copolymer which is, according to the Alkoxide/Water ratio either in the form of solution, or in the form of particle suspension. This solution or suspension is then coated on a support and heated between 700 and 1250 °C. A thin membrane is thus obtained consisting of a mineral network from silicon titanium oxides.

From this process, it is not possible to control the porosity of the obtained membrane.

From the state of the art, one of the essential objectives of the present invention is to provide a novel synthesis method for composite materials, either porous or pseudoporous, based on alkoxide polymers, the said synthesis method which is easy to implement and economical makes it possible to obtain end materials which can easily be handled and converted into articles of various forms, thus opening up many outlets in different fields of application such as separative technologies, in particular the nanofiltration, the pervaporation or the gas separation.

The nanofiltation consists in the separation of species having a molecular weight in the range of 200 to 1000, based on diffusion-convection phenomenon through a porous membrane.

The pervaporation is a separation process with a membrane which can be used to divide up some liquid mixtures that the conventional techniques do not make it possible to treat with favourable conditions. In particular, separative problems appear when the compounds constituting the liquid mixture form an azeotrope or have close volatilities.

This separative technology consists in circulating the mixture by contact with a thin film being selective by permeability, the film being generally compact, i.e., free of pores, and the opposed face of the film being maintained under low pressure by continuous pumping the vapors passing through the membrane. Details of this technique have been described in " L'actualité Chimique" Avril-Mai 1988, p135-144.

It was only after many tests and much research that the Applicant managed to demonstrate, in a completely surprising manner, that it is possible to envisage a synthesis of microporous composite materials, by exploiting the structuring effect of micelles of ionic surfactants, within the framework of a reaction process of the "sol-gel" type consisting of the inorganic polymerisation of alkoxides. Such a procedure is - on the face of it -absolutely not obvious, since it might be feared that there would be a chemical incompatibility between the structuring ionic surfactants and the reagents and substances taking part in the hydrolysis/condensation reactions, inherent in the "sol-gel" technique.

Moreover, it was certainly not predictable that a polymerisation of metallic alkoxides of the "sol-gel" type leading traditionally to dense, random and disordered polymer structures (also referred to as fractals), would make it possible to obtain, in the end, ordered and organised porous anisotropic composite materials based on polymers originating from alkoxide precursors.

In addition, it is very clear to a person skilled in the art that obtaining composite mesoporous zeolites by means of ionic surfactants, as described in US patents 5 057 296 and 5 098 684 cited above, can be distinguished significantly, both with regard to the nature of the products and with regard to the chemical mechanisms involved, from the composite synthesis proposal according to the invention using the "sol-gel" technique.

Thus the present invention therefore concerns, first of all, a process for preparing a porous or "pseudoporous" anisotropic composite material consisting of a conglomerate including,
on the one hand, discreet micellar units with a configuration which is at least partly tubular, in particular with a substantially circular cross section with a structure of the lyotropic liquid crystal type and/or the impressions thereof,
and, on the other hand, a matrix based on ceramic polymer with alkoxide recurrent elements, in which the said units and/or their impressions are included, characterised in that it consists essentially of:
- using at least one ionic surfactant, water and optionally at least one cosurfactant, able to form, in a mixture together, a structure (or phase) of the lyotropic liquid crystal type,
- bringing together at least one metallic alkoxide with the surfactant, water and optional cosurfactant, in proportions chosen so that a lyotropic liquid crystal structure can form and a condensation hydrolysis reaction allowing polymerisation of the alkoxide recurrent elements can take place, and
- optionally subjecting the "pseudoporous" material thus obtained to a treatment for the at least partial elimination of the micellar units so as to confer porosity on the said material.

In the following detailled description, references will be made to the drawings in which :

Figure 1 is a diagrammatic representation in cross section of the material after polymerisation.

Figures 2 and 3 are small angle X-ray diffraction diagrams of the inventive material.

Figure 4 is a electronic scanning micrography of a membrane of the invention.

Figures 5 and 6 show the pervaporation through the membrane of the invention.

According to the present invention, it is surprising to find that the hydrolysis/condensation reaction giving rise to the polymerisation of the alkoxides is in no way disturbed by the structuring micellar units of the lyotropic liquid crystal type, which are generated by the ionic surfactant.

On the contrary, this process makes it possible to obtain, rapidly and conveniently, the porous or "pseudoporous" anisotropic material sought for. The reaction in fact takes place in a liquid reaction medium and at ambient temperature and in an ambient atmosphere, for periods of around two hours, for example.

Particularly favourable economic factors obviously result from this simplicity of methodology.

"Pseudoporous material" within the context of the present invention means a material with a lacunar structure, the skeleton of which is formed from inorganic polymer, eg silica, originating from the hydrolysis/condensation of metallic alkoxides, the said skeleton defining pores occupied by the above-mentioned micellar units. As soon as these units are eliminated, the pores are emptied and henceforth constitute only the impressions of the eliminated units. This then gives a porous material proper.

One of the important characteristics of the process according to the invention is to use the structuring effect of lyotropic liquid crystals to confine the polymerisation of the metallic alkoxides and thus to produce a porous or "pseudoporous" anisotropic material.

These structures or phases of the lyotropic liquid crystal type (also referred to as mesophases), are obtained by means of a surfactant which is ionic, preferably cationic and even more preferably selected from amongst the derivatives of quaternary ammonium, including notably tetra-alkylammonium halides. This surfactant forms, with the water present in the reaction medium and optionally another cosurfactant, micelles which can be likened to structures of liquid crystals with an organisation which is lamellar and/or tubular, and in particular tubular with a substantially circular cross section.

According to one advantageous characteristic of the invention, these tubular micelles and/or their impressions are attached to each other and are preferably ordered geometrically in polygons and even more preferably in hexagons.

The compositions forming precursors of the structuring micellar units may be selected in a manner which is known and appropriate per se, referring, for example, to the literature which describes phase diagrams relating to complex systems comprising an ionic surfactant. It is possible to isolate, in these phase diagrams, regions in which these complex systems adopt, for given compositions, an organisation of the liquid crystal type. This takes place by a systematic method consisting of testing, in advance, different compositions (surfactant/water/optional cosurfactant), assessing the effect of introducing the alkoxide. Thus reference may be made, for example, to the article by A JÖNSSON et al in the journal "Progress in Colloid and Polymer Sciences", 1990, 82 271, the article by KIELMAN and VAN STEEN (Journal de physique Colloque C3, supplement to No 4, volume 4, April 89, pages C3-477 to C3-450).

As soon as the phase diagram is available, it is easy to extract therefrom the quantitative data which determine, for a given combination of surfactants, water and optional cosurfactants, a micellar organisation of the lyotropic liquid crystal type.

The initial composition is in all cases situated on the phase diagram. As the hydrolysis/condensation reaction develops, there is a change from the initial system in the phase diagram, because of variations in concentrations and the appearance of coproducts. In the case of a water/surfactant binary system, in general, it is possible to indicate that the system changes from an isotropic state to structures of lyotropic liquid crystals organised first of all in hexagons, then in cubes and finally in lamellae, when the concentration of surfactant is increased. By acting on the initial concentrations, it is possible to obtain, more specifically, at least one of the above structures.

Advantageously, the ionic surfactant consists of alkylmethylammonium halides, in which the alkyl chains comprise at least 3 atoms of carbon, preferably at least 5 and, even more preferably, from 6 to 20 carbon atoms.

Against all expectations, the presence of the counter-ion brought by the ionic surfactant into the reaction medium in no way interferes with the hydrolysis condensation reactions characteristic of the process of the invention.

Without its being in any way limitative, the ionic surfactants more particularly studied within the scope of the invention are selected from amongst the alkylmethylammonium halides and alkylmethylammonium bromides such as C₈H₁₇(CH₃)₃NBr, C₁₀H₂₁(CH₃)₃NBr, C₁₂H₂₅(CH₃)₃NBr or C₁₄H₂₉(CH₃)₃NBr.

The cosurfactants whose use can be envisaged in the present process according to the invention can be chosen from amongst the chemical families of alcohols or aromatics. By way of example, decanol, pentanol, hexanol, heptanol, octanol or again toluene and/or methanol can be cited.

In addition to the case in which the cosurfactant is supplied exogenously, it is entirely conceivable that this compound would appear as a by-product of the reaction.

Amongst the metallic alkoxides more preferably selected for the process according to the invention, those of the general formula M(OR)ₙ where n is between 2 and 5 and R is alkyl, preferably C₁-C₃₀ and, more preferably still, C₁-C₁₀, can be cited. Advantageously, M represents Si, Ti or Zr and optionally the combinations Si-Ti, Si-Zr, Ti-Zr, Ti-Sr-Si. The compounds for which M = Si, n = 4 and R = methyl, ethyl, propyl or butyl have proved to be entirely suitable.

The choice of the silicon alkoxide as a recurrent element determines the formation of a polysiloxane.

According to a preferred mode of implementing the process according to the invention, at least one metallic alkoxide is mixed homogeneously with at least one ionic surfactant and water. According to a variant, the surfactant or alkoxide is mixed with the water initially, the remaining reagent being added thereafter.

On a quantitative level, the composition of the reaction medium depends, obviously, on the nature of the metallic alkoxide and ionic surfactant. In any event, they must remain within limits compatible with the formation of a structuring phase of the lyotropic liquid crystal type.

Subject to this, it can be stated that the proportions of the constituents of the reaction medium are advantageously as follows:
- surfactant: 1 to 40%, preferably 10 to 30% and even more preferably 15 to 25%,
- water: 40 to 98%, preferably 55 to 85% and even more preferably 60 to 70%,
- alkoxide: 0.5 to 20%, preferably 5 to 15% and even more preferably 10 to 15%,

the percentages being percentages by weight with respect to all three compounds together.

According to a noteworthy provision of the invention, the reaction temperature is between 10 and 50°C, whereas ambient temperature is particularly preferred (15-25°C).

The pH is one of the reaction parameters to be taken into consideration in the process of the invention. Thus it is preferred to fix this at between 3 and 12, and preferably between 6 and 10. In practice a pH of around 7 is chosen.

The initial medium therefore consists of a solution of lyotropic liquid crystal or an isotropic phase intended to be transformed into a lyotropic liquid crystal. This medium will serve as a base for the hydrolysis/condensation reactions, causing the polymerisation of the metallic alkoxide. The structuring surfactant of the lyotropic liquid crystal type (micellar units) forms, in situ, simultaneously with the start of the polymerisation reaction. Some of the water constituting the liquid crystal phase is used in the hydrolysis reaction. The structuring micellar units bring about a confinement of the alkoxide recurrent elements during polymerisation.

This leads in the end to the formation of a polymer lattice organised in a lamellar and/or tubular skeleton determined by the micellar units. According to the invention, this skeleton is formed by tubular elements with a substantially circular cross section and organised in polygons, and preferably in hexagons.

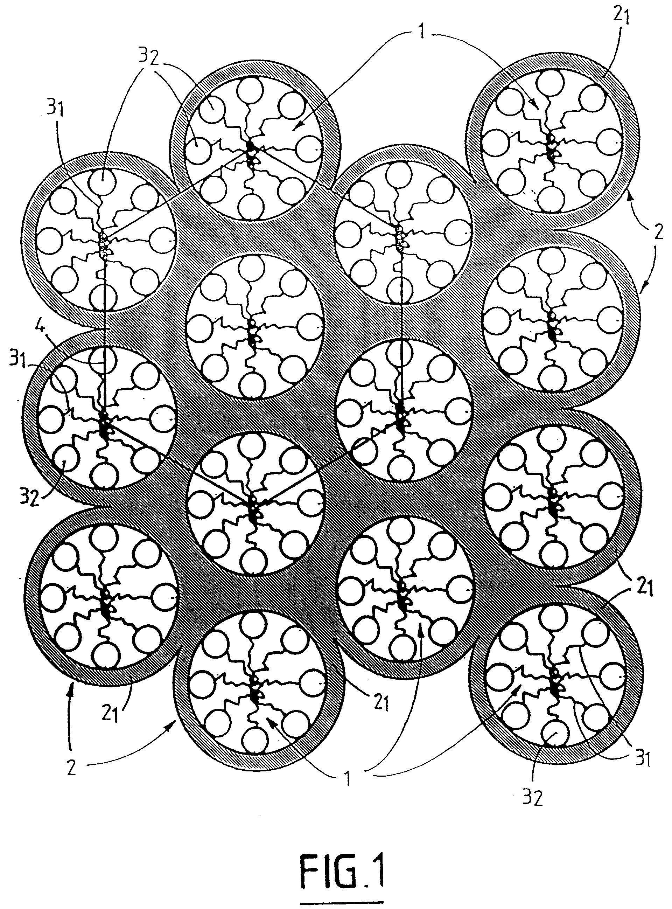

The accompanying Fig 1 is a diagrammatic representation in cross section of the material obtained after polymerisation.

In this figure, the micellar units 1 can be seen, housed in tubular cells 2, attached to each other and circular in shape overall. These cells 2 are formed by walls 2₁, formed by the inorganic polymer. Where the alkoxide is a silicon alkoxide, the polymer is a polysiloxane. The micelles 1 present in the aperture of the tubular cells 2 consist of molecules of surfactant. The hydrophobic non-polar alkyl chains of the surfactant are designated by the reference numeral 3₁. They converge towards the centre of the micellar units 1 whilst their hydrophobic polar heads 3₂ are distributed uniformly over the entire periphery of each tubular cell 2.

As is clear from Fig 1, the attached cells 2 are ordered in hexagons. In other words, the cells can be considered by groups of seven, in each of which six cells have their centres disposed at the angles of a virtual hexagon designated by the reference numeral 4 in Fig 1, whilst the seventh cell occupies the centre of the hexagon 4.

This material can be described as being composite, anisotropic, "pseudoporous" and formed by organic micellar units 1 and an inorganic polymer matrix (2, 2₁), for example of polysiloxane.

This final material is advantageously in the form of a polymer gel, originating from the initial liquid reaction medium.

This form of gel is particularly appropriate for implementing a possible supplementary step of forming as a monolithic article and/or a thin film. It can, in fact, be perfectly envisaged that the material obtained could be formed as a film, for example by coating on a support or as any other article of varied shape, for example by moulding.

These materials can have different shapes such as for example, self-supported films, crack free thin films coated on different substrates or bulk materials.

The materials obtained by the process of the present invention are materials having a sequenced porosity which can be modulated from an initial structure of the lyotropic liquid crystal type.

In order to eliminate the surfactant organised in micellar units, the pseudoporous material obtained by the process according to the invention can be subjected to an additional step of heat treatment at a temperature above 300°C. In practice, this heat treatment or calcination step is advantageously carried out at a temperature of between 400 and 500°C.

This calcination is preferably carried out under a flow of inert gas, for example nitrogen, providing for a progressive increase in temperature. It is also advantageous to provide for an intermediate level temperature stage.

Thus, for a temperature of 450°C, the rate of temperature rise is 0.5°C/min with a level stage at 300°C, for example.

The total duration of this treatment may vary between one and several hours with intermediate level stages of 5 to 60 minutes.

According to a variant, the heat treatment is carried out at least partly in air or even better in oxygen, so as to eliminate the residual carbon originating from the decomposition of the surfactant.

The elimination of the micellar units leaves the apertures of the tubular elements empty. This therefore gives the material a micro-(meso)porosity characterised by pores of a size of between 5 and 30 Å and preferably 10 to 20 Å.

It is particularly surprising to find that the elimination of the structuring micellar units by heat treatment does not cause the destruction of the organised porous lattice obtained. The inorganic polymer therefore has a good mechanical strength.

By the process of the present invention, continuous anisotropic microporous thin films with a controllable porosity are advantageously obtained and used in many applications for separatives processes.

According to an advantageous arrangement of the invention, provision is made to incorporate active molecules in the reaction medium and/or on the finished porous or "pseudoporous" materials. These active molecules can be diluted in the initial reaction medium and/or optionally at any time during the process. They can also be absorbed on the finished materials.

In order to be able to be added to the reaction medium, it goes without saying that they must be inert with respect to the reaction in question.

These molecules may be active, for example with regard to linear or non-linear optics or again with regard to catalysis.

According to another one of its aspects, the present invention concerns, as a novel product, a porous or "pseudoporous" anisotropic composite material consisting of a cluster including,
on the one hand, discreet micellar units with a configuration which is at least partly tubular and a structure of the lyotropic liquid crystal type, and/or the impressions thereof,
and, on the other hand, a matrix based on ceramic polymer with alkoxide recurrent elements, in which the above-mentioned units and/or their impressions are included.

Such a material can notably be obtained by the process as described above.

Advantageously, the tubular micellar units have a substantially circular cross section and are organised in polygons and preferably in hexagons (cf Fig 1).

The composite materials in which the impressions of discreet micellar units are found are those for which elimination of the discreet micellar units formed by the ionic surfactant, water and optionally a cosurfactant has been carried out.

The characteristics described above for the composite materials obtained by the process according to the invention are also valid for the materials according to the invention considered independently of their method of obtaining.

The structure of the composite materials according to the invention can be characterised by analysis of their small-angle X-ray diffraction.

It is also possible to define the micro-(meso)porous materials obtained after additional heat treatment by their porosity and specific surface area characteristics.

As mentioned above, the porosity of the composite materials of the invention depends on the nature of the starting compounds reacted and their respective proportions. But, in any case, one of the noteworthy properties of the invention lies in the structural and dimensional homogeneity of the pores.

It is also very interesting to be able to vary the diameter of the latter by acting on the length of the alkyl chains in the surfactants used.

The materials according to the invention are able to form carriers which are advantageous for a wide variety of active molecules, notably in linear or non-linear optics or chemical catalysis.

As an example of an active molecule, methylnitroaniline can be cited, which is active in non-linear optics and can be used for example for frequency doubling when it is oriented.

Moreover, the materials according to the invention are naturally of interest in thin films, particularly as membranes because of their porosity characteristics.

According to the present invention, the separative microporous membranes are obtained by coating on a substrate the solution obtained from the step (2) of the process.

From the experiments carried out in the scope of the present invention, two parameters have to be considered during the coating of the solution : the relative coating time T/Tg wherein T represents the time between the moment where the solution is prepared and the moment where the solution is coated on the substrate, and Tg represents the necessary time to obtain a gel from the solution, the state of "gel" being macroscopically defined, and the contact time between the substrate and the solution.

In a conventional manner, a "gel" is obtained either when the viscosity of the solution tends to infinite or when the percolation limit is reached.

By adjusting both parameters, homogeneous crack free films having a thickness in the range of 0.5 to 1 µm, preferably about 0.7 µm are obtained.

According to one embodiment, thick crack free films have been obtained when Tg/T is close to zero and the contact time is less than 10 minutes, preferably about 3 minutes.

The preferred substrates are materials having a porosity higher than the porosity of the inorganic membrane. In order to avoid the clogging up of the membrane, substrates preferably used are asymmetrical substrates, i.e., substrates having a variable porosity.

The shape of substrates can largely varied, for example, the substrate can be plane or tubular, made of oxides such as alumina, zirconia or silica.

According to one embodiment, it is preferred to use tubular substrates which are easier to use and have a good mechanical resistance.

According to the invention, these microporous membranes are particularly useful in the separative processes.

The invention also concerns a catalyst system comprising the materials described above, in any form whatsoever, e.g. a thin film.

The following examples give an even better illustration of all the characteristics, advantages and variant implementations and/or embodiments of the process and materials according to the invention.

### EXAMPLES

### EXAMPLE 1: SYNTHESIS OF A PSEUDOPOROUS COMPOSITE MATERIAL FROM A SILICON ALKOXIDE AND AN IONIC SURFACTANT

### 1.2. Products and methodology used

The cationic surfactants used in this example are aklyltrimethylammonium bromides with lengths of aklyl chains of 8, 10, 12 or 14 carbon atoms. These products are respectively designated below:
- T₁ = C₈H₁₇(CH₃)₃NBr,
- T₂ = C₁₀H₂₁(CH₃)₃NBr,
- T₃ = C₁₂H₂₅(CH₃)₃NBr,
- T₄ = C₁₄H₂₉(CH₃)₃NBr.

The recurrent metallic alkoxide element is an alkoxysilane precursor of the tetramethoxysilane (TMOS) type.
Water is also used without having recourse to a cosurfactant.

The proportions of surfactant/TMOS/water are: 21/12/67 expressed as a percentage by weight.

The following are thus mixed homogeneously:
- 3.81 g of T₁, T₂, T₃, T₄, and
- 12.04 g of water.

The 2.14 g of tetramethoxysilane is then added to this mixture.

The pH of the reaction medium is fixed at 7 and the volume fraction of water φₑ is 0.853. The temperature is 20°C.

After 3 hours of reaction at ambient temperature and in an ambient atmosphere, the gels of composite material M₁ to M₄ - corresponding to T₁ - T₄ respectively - are formed. These are transparent materials fixed in their initial conformation (thin layer, film or monolith of a given shape).

### 1.2 Structural characterisation

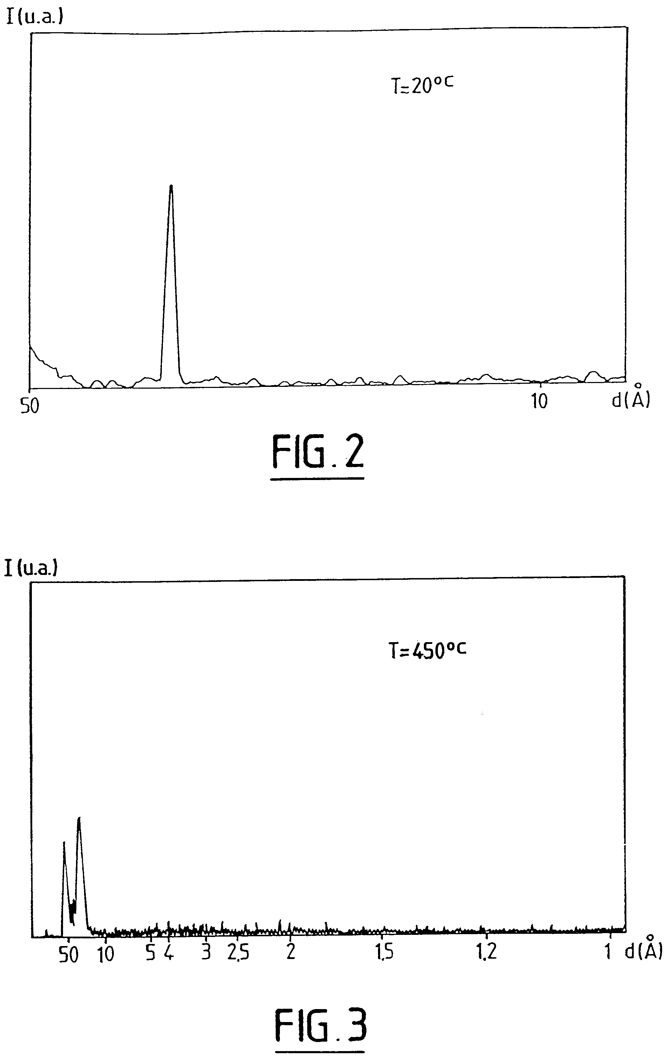

Analysis of the material M₁ by small-angle X-ray diffraction enables a diagram to be produced which is reproduced in the accompanying Fig 2. This diagram has on the Y axis the units I(U.a) corresponding to the intensity of the diffracted X-ray beam expressed in arbitrary units, and on the X axis the unit d(Å) corresponding to the mesh parameter of the structuring liquid crystal phase which forms within the reaction medium.

The devices used in the examples for the small-angle X-ray diffraction measurements and for the study of the porosity are given below.

### - Small-angle X-ray diffraction:

Two items of equipment are used:
1 - Measurement of the monochromatic radiation Kₐ of copper diffracted on a curve counter of the INEL CDS 120 multichannel analyser type;
2 - Measurements carried out on a Siemens D 5000 diffractometer.

### - Porosity:

ASAP 2000 analyser made by Micromerities.

As shown in Fig 2, the material M₁ obtained at T = 20°C has a small-angle X-ray diffraction diagram comprising an intense peak at 24.3 ± 1 Å and two low-intensity peaks at 14.3 and 12.5 Å.

These two low-intensity peaks are the signature of a liquid crystal structure of the hexagonal type, leading to a pseudoporous final cluster as shown in Fig 1. This tubular structure with a circular cross section can be only partial since it in fact constitutes a change to or a differentiation of a basic lamellar structure.

In this low-temperature synthesis, the appearance of a reaction coproduct is found: methanol. Without wishing to be bound by the theory, it could reasonably be conceived that this alcohol participates in the formation of the liquid crystal phase, in association with the water and the ionic surfactant. These compounds form a ternary system, in the phase diagram of which it is possible to isolate the area corresponding to a state or structure of the lyotropic liquid crystal type.

As indicated above, the circumscribing of the said region is effected using a systematic method which is well known to and mastered by persons skilled in the art, consisting of first testing different compositions, taking into consideration the effect brought about by the introduction of the reactive alkoxide (the recurrent polymerisation unit).

### EXAMPLE 2: OBTAINING COMPOSITE MICROPOROUS MATERIALS ACCORDING TO THE INVENTION

### 2.1 Methodology

The gels M₁ to M₄ obtained at ambient temperature and in an ambient atmosphere in Example 1 are subjected, after being layered in films, to an additional step of heat treatment at 450°C in nitrogen. Such a treatment is carried out with a rate of temperature rise of 0.5°C.min⁻¹ and a level stage at 300°C. The duration of each of the level stages at 300°C and 450°C is 2 hours. This heat treatment in nitrogen has the effect of eliminating the methanol coproduct and the surfactant, the separation of the latter taking place more particularly during the level stage at 300°C.

A second heat treatment is implemented following the first, at the same temperature, so as to eliminate any organic residues which may still be present in the composite material, which at this time, no longer has the discreet micellar units but rather the impressions of these.

In this way uncrazed films are obtained.

It is important to emphasise that the materials M₁ to M₄ according to the invention keep their original mechanical strength perfectly in spite of the elimination of the structuring micellar units. These are therefore micro-(meso)porous materials which are fully operational and have a stable structure.

### 2.2 Structural characterisation

The heat-treated porous materials M₁ to M₄ are subjected to a small-angle X-ray diffractometry analysis. The accompanying Fig 3 shows the diffractogram obtained for the material M₁, with I(u.a) and d(Å) having the same meanings as those indicated above for Fig 2.

This diffractogram demonstrates that the organisation present in the gel obtained at ambient temperature is maintained after heat treatment.

### 2.3. Study of the porosity

For the heat-treated materials M₁ and M₂ (C₈ and C₁₀ surfactant respectively), an analysis of the porous texture is carried out by nitrogen adsorption/desorption. The nitrogen adsorption/desorption isotherms give the following characteristics for M₁ and M₂.

| | M₁ | M₂ |
|---|---|---|
| BET specific surface area (m².g⁻¹) | 1264 | 1039 |
| Microporous surface area (m².g⁻¹) | 1166 | 984 |
| Porous volume (cm³.g⁻¹) | 0.67 | 0.60 |
| Microporous volume (cm³.g⁻¹) | 0.55 | 0.53 |
| Total porosity (%) | 60 | 57 |
| Mean pore radius (Å) | | |
| -Horvarth Kawazoe method | 4.8 | 6.5 |
| - MP method | 4.7 | 5.8 |

The size of the pores is determined by the length of the alkyl chain of the surfactant and the microporous volume may be adjusted by acting on the quantity of surfactant introduced. These porosity measurements show that a microporous composite material has indeed been obtained, having tubular pores, preferably with a circular cross section and disposed in hexagons, which are in fact the impressions of the initial discreet micellar units. It is around the latter that the inorganic polymerisation (gelation) of the metallic alkoxides took place. There was no destructuring after elimination of the micelles by heat treatment.

### EXAMPLE 3: APPLICATIONS: INCLUSION OF ORGANIC MOLECULES IN THE MATERIALS M₁ TO M₄ WHICH HAVE NOT BEEN HEAT TREATED

Methylnitroaniline molecules with non-linearity properties (frequency doubling) when they are oriented, are introduced into the initial aqueous reaction medium (Cf Example 1). These methylnitroaniline molecules are present to the extent of 3.3 10⁻⁴ M.

The gel obtained has a very intense X-ray diffraction peak at 25 Å, which demonstrates that the hexagonal phase is maintained in the presence of a methylnitroaniline molecule.

Tests carried out on a rig including a YAG laser show that the material has a frequency-doubling non-linear response which is stable over time. The measurements are considered with respect to a KDP (potassium dihydrogen phosphate) reference in powder form, with a particle size of 25 µm and a thickness of 1 mm.

Two tests are carried out:

### - Test 1:

Monolith with a thickness of 1 mm. The yield obtained is 8% with respect to the KDP;

### - Test 2:

Layer with a thickness of 0.4 mm deposited on a glass substrate. The yield obtained is 17% with respect to a thickness of 1 mm of KDP.

### EXAMPLE 4: PREPARATION OF A MEMBRANE OF THE INVENTION

A solution is prepared according to the methodology of example 1 by using the cationic surfactant T1 (length of the alkyl chain of 8 carbon atoms). The Tg value of such a solution has been evaluated to 3 hours.

When the T/Tg value is close to zero , the obtained solution is coated on a tubular substrate of γ-Al₂O₃ having an external diameter of 10 mm, an internal diameter of 7 mm, and constituted of four alumina layers having a porosity of 10 µm, 0.8 µm, 0.2 µm and 5 nm, respectively.

The coating of the solution onto the substrate is made by slip-casting process with a contact time of about 3 min.

The coating thus obtained is thermally treated according to example 2.1

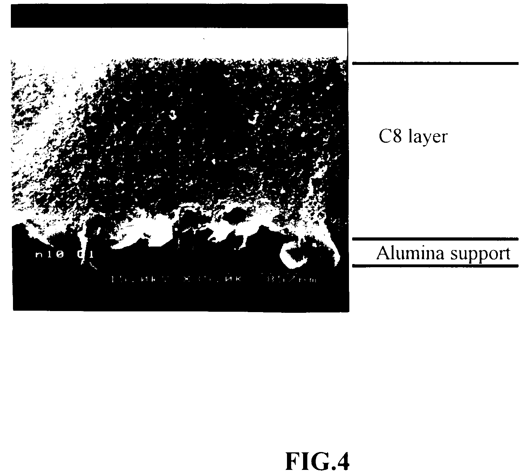

Figure 4 is an electronic scanning micrography of a membrane obtained by the process of the invention wherein the surfactant comprises 8 carbon atoms (C8 layer). This TEM micrography shows a crack free membrane with a thickness of about 1 µm.

### EXAMPLE 5: APPLICATION OF THE MEMBRANE OF THE INVENTION TO THE NANOFILTRATION

In this example, a saccharose solution (0.1M) is treated through the membrane of example 4. The mean diameter of the saccharose molecules is about 0.8 to 1 nm.

The experimental results show that with the membrane obtained from the surfactant T1, the saccharose retention rate is about 21 % due to the molecular sieve effect of the membrane pores which have a pore diameter from 0.9 to 1 nm.

### EXAMPLE 6: APPLICATION OF THE MEMBRANE OF THE INVENTION TO THE PERVAPORATION

The membrane of example 4 is placed in a vessel in order to form two compartments. A pressure difference of 1 bar is applied to the membrane (1013 mbar before the membrane and 3 mbar after the membrane).

### 6.1 Water/Ethanol mixture

When the pervaporation of a Water/ethanol mixture having an initial composition of 80/20 weight % is carried out through the membrane of example 4, the obtained pervaporate (liquid recovered after the membrane) contains 68 weight % water and 32 weight % ethanol with a flow through the membrane of 0.74 Kg.m².h⁻¹.

### 6.2 Ethanol/cyclohexanol mixture

The pervaporation of an ethanol/cyclohexane mixture of was carried out at 20°C (Bp.ethanol : 78.3 °C, Bp.cyclohexane 80.8 °C, Azeotrope : 70.8 weight % cyclohexane at 64.8 °C) .

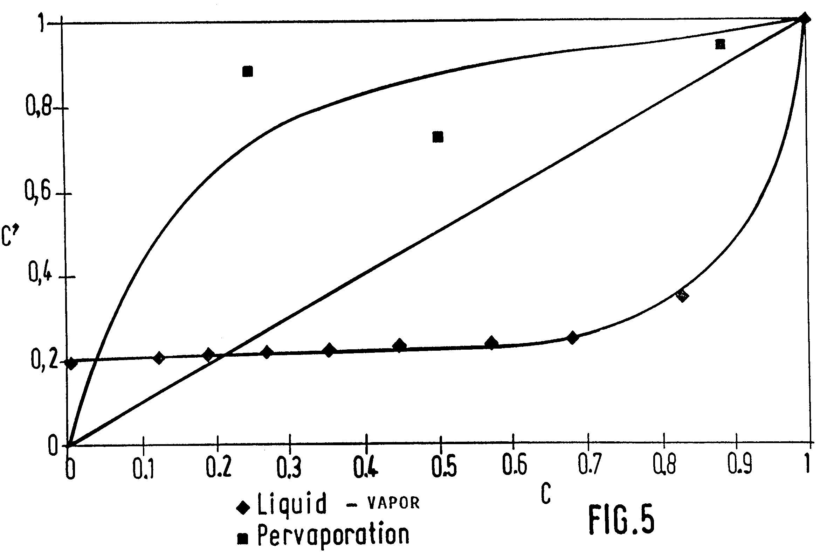

Figure 5 shows the pervaporation results of different Ethanol/water mixtures through the membrane of example 4, wherein c is the ethanol weight fraction in the starting solution and c' is the ethanol weight fraction in the pervaporate. In figure 5, it is also reported the representative points of the liquid-vapour equilibrium compositions at 25 °C.

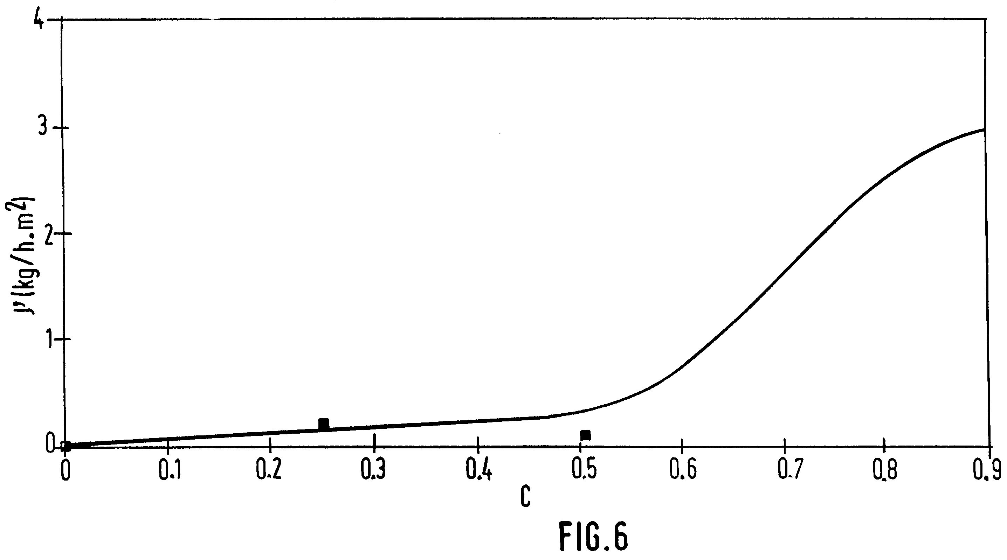

Figure 6 represents the evolution of the pervaporate flow J' (cyclohexane+ethanol) versus c.

These results confirm the textural features of the membrane, i.e., the presence of a microporous material.

## Claims

1. Process for preparing a porous or pseudoporous anisotropic material consisting of a conglomerate including,
on the one hand, discreet micellar units with a configuration which is at least partly tubular and a structure of the lyotropic liquid crystal type and/or the impressions thereof,
and, on the other hand, a matrix based on ceramic polymer with alkoxide recurrent elements, in which the said units and/or their impressions are included,
characterised in that it consists essentially of:
- using at least one ionic surfactant, water and optionally at least one cosurfactant, suitable for forming, in a mixture together, a structure (or phase) of the lyotropic liquid crystal type,
- bringing together at least one alkoxide with the surfactant, water and optional cosurfactant, in proportions chosen so that a lyotropic liquid crystal structure can form and a condensation hydrolysis reaction allowing polymerisation of the alkoxide recurrent elements can take place, and
- optionally subjecting the "pseudoporous" material thus obtained to a treatment for the at least partial elimination of the micellar units so as to confer porosity on the said material.

2. Process according to Claim 1, characterised in that the ionic surfactant is cationic and is preferably selected from amongst the quaternary ammonium salts and even more preferably from amongst the alkylmethylammonium halides.

3. Process according to Claim 1 or Claim 2, characterised in that the alkoxide is a silicon alkoxide.

4. Process according to any one of Claims 1 to 3, characterised in that the proportions for the compounds present in the reaction medium are as follows:
- surfactant: 1 to 40%, preferably 10 to 30% and even more preferably 15 to 25%,
- water: 40 to 98%, preferably 55 to 85% and even more preferably 60 to 70%,
- alkoxide: 0.5 to 20%, preferably 5 to 15% and even more preferably 10 to 15%,
the percentages being percentages by weight with respect to all three compounds together.

5. Process according to any one of Claims 1 to 4, characterised in that the reaction temperature is between 10 and 50°C, ambient temperature being preferred in particular.

6. Process according to any one of Claims 1 to 5, characterised in that the pH of the reaction medium is fixed at between 3 and 12, preferably between 6 and 10 and even more preferably at a value of around 7.

7. Process according to any one of Claims 1 to 6, characterised in that the composite material obtained is in the form of a gel.

8. Process according to any one of Claims 1 to 7, characterised in that it comprises at least one additional step consisting of the forming of articles as monoliths or thin films.

9. Process according to Claim 1, characterised in that the elimination of the micellar units consists of a heat treatment at a temperature greater than or equal to 300°C and preferably between 400°C and 500°C.

10. Process according to any one of Claims 1 to 9, characterised in that provision is made for incorporating active molecules in the reaction medium and/or on the finished porous or "pseudoporous" materials.

11. Porous or "pseudoporous" anisotropic material consisting of a conglomerate including,
- on the one hand, discreet micellar units with a configuration which is at least partly tubular and a structure of the lyotropic liquid crystal type, and/or the impressions thereof,
- and, on the other hand, a matrix based on ceramic polymer with alkoxide recurrent elements, in which the above-mentioned units and/or their impressions are included.

12. Material according to Claim 11, characterised in that the tubular micellar units and/or their impressions are attached to each other and are ordered geometrically, preferably in polygons and even more preferably in hexagons.

13. Material according to Claim 11 or 12, characterised in that the alkoxide is a silicon alkoxide.

14. Material according to any one of Claims 11 to 13, characterised in that the discreet micellar units consist of amphiphilic molecules of ionic, and preferably cationic, surfactant, the salts of quaternary ammonium and their derivatives being preferred in particular.

15. Material according to any one of Claims 12 to 14 or able to be obtained by the process according to any one of Claims 1 to 10, characterised in that it is used as active molecules particularly in linear or non-linear optics or in catalysis.

16. Thin film characterised in that it consists of the material able to be obtained by the process according to any one of Claims 1 to 10 or the material according to any one of Claims 11 to 15.

17. Microporous membrane comprising a substrate having thereon a thin film of a porous material obtainable by the process of any of claims 1 to 9.

18. Microporous membrane comprising a substrate having thereon a thin film of a porous material according to any of claims 11 to 14.

19. Microporous membrane according to claim 17 or 18 wherein the substrate is tubular.

20. Microporous membrane according to claim 19 wherein the substrate est γ-Al₂O₃.

21. Separative system constituted of a set of microporous membranes as defined in any of claims 17 to 20.

22. Catalytic system characterised in that it comprises, as a carrier, a material obtainable by the process according to any one of Claims 1 to 10, a material according to any one of Claims 11 to 15 or a thin film according to Claim 16.
